# EUROPEAN PATENT SPECIFICATION

(11) **EP 2 619 969 B1**
(45) Date of publication and mention of the grant of the patent: **06.12.2017**
(21) Application number: 11738029.5
(22) Date of filing: 21.07.2011
(51) Int. Cl.: H04M 3/30

(54) **TESTING OF TELECOMMUNICATIONS EQUIPMENT**
TESTEN EINER TELEKOMMUNIKATIONSANLAGE
TEST D'ÉQUIPEMENT DE TÉLÉCOMMUNICATION

(30) Priority: 22.09.2010 EP 10251630
(43) Date of publication of application: 31.07.2013
(73) Proprietor: British Telecommunications Public Limited Company, London EC1A 7AJ (GB)
(72) Inventor: TURNER, Mel, Frank, London EC1A 7AJ (GB); GREEN, Adam, London EC1A 7AJ (GB)
(74) Representative: Lidbetter, Timothy Guy Edwin
(86) International application number: PCT/GB2011/001095
(87) International publication number: WO 2012/038684

(56) References cited:
- EP-A2- 2 007 071
- WO-A2-2005/013592

## Description

This invention relates to the testing of telecommunications equipment, and in particular to the identification of overload conditions in a switching point in the network.

Telecommunications connections are subjected to field tests on installation, and periodically when in service, to confirm their integrity. Such test signals require relatively small bandwidth. Examples of such test installations are described in patent applications WO2005/013592 and EP2007071.

However, large amounts of data are generated by such systems, which can result in high packet-loss at the local exchange, despite previous field tests indicating that the connections should have been able to support this type of service. In such circumstances it is desirable to be able to identify whether the problem is in the local loop or deeper in the network. There is therefore a requirement for a method of stress testing a local loop connection by saturating it with large amounts of data, whilst isolating the local loop from the rest of the network, in order to determine the location of the problem.

According to the invention, there is provided a method of stress testing a telecommunications connection between a customer premises termination and a local switching system connected to a network, independently of the rest of the network, by using a test device provided with an emulation processor and connected to the customer premises termination, the method comprising the steps of:
a) using the emulation processor to control the test device such that a port on the test device is mapped to a dummy device destination address at a dummy destination node address;
b) using the emulation processor to generate a high volume of simulated data traffic and transmit said simulated data traffic to said dummy device destination address through said port;
c) using the local switching system to intercept said test data such that the data routing is terminated at the local switching system and the test data is forwarded to a data analysis processor arranged to detect one or more characteristics of said intercepted data.

The invention also provides a performance testing system for stress testing a telecommunications connection between a customer premises termination and a connection through a local switching system to a network, independently of the rest of the network, comprising a gateway in the network and a performance testing platform, the gateway being arranged to divert traffic having a predetermined destination address to the performance testing platform, and the performance testing platform being provided with an emulation processor and a port for connection to the customer premises termination through the gateway the emulation processor being arranged to control the performance testing platform such that the port on the performance testing platform is mapped to a dummy device destination address at a dummy destination node address; and the emulation processor is arranged to generate a high volume of simulated data traffic and transmit said simulated data traffic to said dummy device destination address through said port.

The invention also provides a local switching system comprising a termination of a connection from a customer premises termination to provide an interface to a switched telecommunications network, and arranged to intercept test data received over the connection and to divert the test data, by way of a connection independent of the rest of the network, to a data analysis processor arranged to detect one or more characteristics of said intercepted data.

The invention enables test traffic to be sent just over the local loop connection between the customer premises equipment and the Digital Subscriber Line Access Multiplexer (DSLAM) at the exchange, without requiring large amounts of data to be sent over the wider network.

Packet failures not picked up by the customer premises equipment (CPE) can be viewed by a field technician using a portable computer to generate traffic which overloads and stresses the capacity of local loop. The computer's routing table is modified to enable data to be generated and sent out over the local line, which is then terminated at the local exchange. By modifying the routing table to generate a dummy internet address recognisable by the exchange, the quantity of data generated by the performance testing program can be increased to a level sufficient to stress test the local loop.

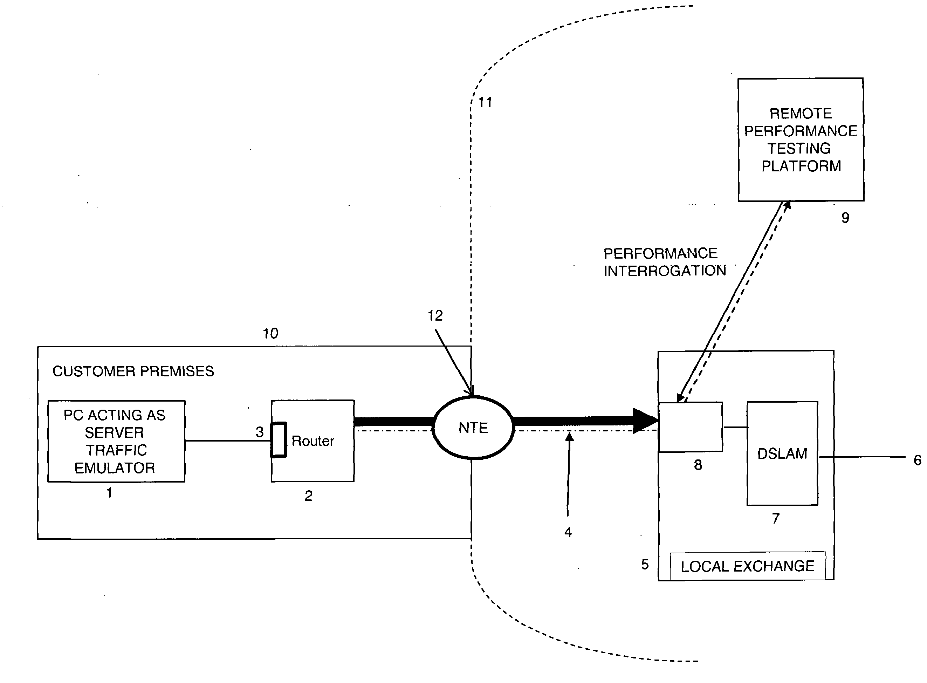

An embodiment of the invention will now be described, by way of example, with reference to the Figure, which depicts the various elements which co-operate to perform the invention, together with the information flows which take place between them.

The customer premises 10 is connected to the public network 11 at a network termination 12, from which a "local loop" connection 4 connects it to the local exchange 5. Within the exchange 5 a Digital Subscriber Line Access Multiplexer (DSLAM) 7 provides the necessary connections to enable connection between the local loop 4 and the rest of the telecommunications network 6. The DSLAM 7 provides a number of ports to enable different services and connections to be provided using the same physical connection 4, for example a digital connection over the internet, an ordinary circuit-switched voice connection, etc.

According to the invention an additional gateway 8 is provided in the switching system to intercept incoming data traffic and divert traffic having a predetermined destination address to a separate performance testing platform 9 associated with the exchange 5, instead of to the DSLAM 7. This allows the test procedures to be performed without overloading the main network 6. The performance testing platform 9 may be co-located with the exchange, but preferably it is linked to the exchange by a dedicated connection independent of the public network 6, allowing it to serve several exchanges.

The invention also provides a performance testing platform, complementary to the modified switching system, for stress testing a telecommunications connection between a customer premises termination and a connection through a local switching system to a network, independently of the rest of the network, the performance testing platform being provided with an emulation processor and a port for connection to the customer premises termination through a gateway provided to divert traffic having a predetermined destination address to the performance testing platform,
the emulation processor being arranged to control the performance testing platform such that the port on the performance testing platform is mapped to a dummy device destination address at a dummy destination node address;
the emulation processor is arranged to generate a high volume of simulated data traffic and transmit said simulated data traffic to said dummy device destination address through said port.

The customer premises equipment comprises a router or wireless hub 2 which incorporates a modem and one or more ports 3, the or each port allowing connection of a user terminal so as to communicate with the internet 6 through the local loop 4, or to allow user terminals to communicate with each other.

In order to perform the method of the invention, a computer 1 or other device is provided with an emulation processor to generate a high volume of simulated data traffic, addressed to a predetermined network address. This computer 1 may be a terminal operated by a field technician who has been granted temporary access to the user's router 2 for the purpose of performing the test, or it may be a terminal belonging to the customer on whose premises the test is to take place. In the latter case, the emulation processor program may be downloaded to a digital storage medium on the user device from another digital storage medium such as a field technician's computer, a machine readable carrier, or remotely over the internet 6. The program may be arranged to operate for a predetermined period or at predetermined times of day corresponding to the times of day when problems have been reported. The programme may be set to run indefinitely, or to cease operating and uninstall itself after the required tests have been completed.

The test data may be in any form suitable for analysis at the receiving end to determine the capabilities of the links over which it is carried. Preferably the data rate is variable, so that the performance of the data link under test may be tested at different loadings, and so that the maximum capacity may be determined for which acceptable performance is achievable. Alternatively the data rate may be set to a predetermined data rate at which packet loss has been recorded, thus allowing the local loop to be identified or eliminated as the cause of such packet loss.

The computer 1 is connected to the router 2 and the emulation programme causes the computer to modifying its address routing table so as to open a port 3 to a dummy MAC/IP address. The router 2 recognises this as a network address and forwards the test data to the DSLAM.

The dummy address is programmed into the interception gateway 8 associated with the DSLAM 7. The ARP table, (address resolution protocol) which controls routing in the DSLAM arranges for the modified data to be transmitted, despite no real destination actually existing. As the IP address is a dummy IP address, it does not appear in Internet routing tables and so the DSLAM 7 cannot forward the traffic beyond the local exchange 5. Instead, the interception gateway 8 recognises this address as requiring special handling, and instead of routing the data into the Internet 6, as it would for a normal address, the test data is diverted to the performance testing platform 9.

The performance testing platform intercepts the traffic and measures characteristics such as packet loss rate. The data is analysed to determine the performance of the local loop 4 in isolation, without passing through the rest of the network 6, and therefore without needing to take account of any effects from the rest of the network. Very high volumes of test data can be transmitted, up to the maximum capacity of the local loop 4 and the router 1, so as to determine the behaviour of the local loop and router under such conditions without large amounts of data overloading the rest of the network 6 or causing contention problems for other users.

Once initial contact has been established between the user terminal 1 and the testing platform 9, test traffic can also be passed between the performance testing platform 9 and the traffic emulator 1 in the reverse direction by way of the gateway 8, again without involvement of the DSLAM. The user terminal 1 is configured to perform similar measurements to those on the forward stream made by the performance testing platform, and to report the results to the performance testing platform. This allows testing of the connection in the reverse direction, which is particularly significant for connections in which the data flows are highly asymmetric. For example, in many domestic situations the amount of data sent from the user to the network is several orders of magnitude less than the data received by the user - for example a request for a streamed video as compared with the streamed video that is returned in response to that request - and it is the downstream path which is the more likely to suffer capacity or contention problems.

The traffic is intercepted before normal processing by the DSLAM, so it is not counted towards any usage restrictions applied to the user's account. Moreover, as the process is operated within the user premises and the DSLAM, the operation of the invention is independent of the nature of the local loop 4. In the Figure, the connection 4 is depicted as a wired connection, but the process is equally applicable to analysing the performance of optical or wireless connections.

## Claims

1. A method of stress testing a telecommunications connection (4) between a customer premises termination (12) and a local switching system (5) connected to a network (6), independently of the rest of the network, by using a test device (1) provided with an emulation processor and connected to the customer premises termination, the method comprising the steps of:
a) using the emulation processor to control the test device such that a port on the test device is mapped to a dummy device destination address at a dummy destination node address;
b) using the emulation processor to generate a high volume of simulated data traffic and transmit said simulated data traffic to said dummy device destination address through said port;
c) using the local switching system to intercept said test data such that the data routing is terminated at the local switching system and the test data is forwarded to a data analysis processor (9), arranged to detect one or more characteristics of said intercepted data.

2. A method as claimed in claim 1, wherein the emulation processor generates test data capable of occupying 100% of the bandwidth of the tested connection.

3. A method according to claim 1 or claim 2, wherein the test device (1) operates a modified routing table to generate a dummy internet address recognisable by the local switching system (5), and wherein the exchange diverts data having the dummy address to a performance testing processor (9)

4. A method according to claim 3, wherein an address resolution protocol for controlling routing in the exchange (5) is configured to accept data having the dummy address and to divert it to the performance testing platform (9) and not to the network (6).

5. A method according to claim 3 or claim 4, wherein the performance testing processor(9) is linked to the exchange (5) by a dedicated connection independent of the public network (6).

6. A method according to claim 5, wherein the performance testing processor (9) has dedicated links to a plurality of exchanges.

7. A method according to claim 3, claim 4, claim 5 or claim 6, wherein the performance management platform (9) generates test traffic for transmission to the test device (1).

8. A method according to claim 7, wherein the test device (1) detects one or more characteristics of the test traffic transmitted to it by the performance test processor (9) to generate a test measure, and transmits the test measure to the performance testing processor.

9. A performance testing system for stress testing a telecommunications connection (4) between a customer premises termination (12) and a connection through a local switching system (5) to a network (6), independently of the rest of the network, comprising a gateway (8) in the network and a performance testing platform (9), the gateway being arranged to divert traffic having a predetermined destination address to the performance testing platform (9), and the performance testing platform (9) being provided with an emulation processor and a port for connection to the customer premises termination (12) through the gateway (8)
the emulation processor being arranged to control the performance testing platform such that the port on the performance testing platform is mapped to a dummy device destination address at a dummy destination node address;
and the emulation processor is arranged to generate a high volume of simulated data traffic and transmit said simulated data traffic to said dummy device destination address through said port.

10. A performance testing system as claimed in claim 9, wherein the emulation processor (9) generates test data capable of occupying 100% of the bandwidth of the tested connection (4).

11. A performance testing system according to claim 9 or claim 10, wherein the test device (1) operates a modified routing table to generate a dummy internet address recognisable by the local switching system.

12. A performance testing system according to claim 11, wherein the test device (1) is arranged to detect one or more characteristics of test traffic transmitted to it over the telecommunications connection (4) by a performance test processor (9) to generate a test measure, and transmits the test measure to the performance testing processor (9).

13. A local switching system (5) comprising a termination of a connection (4) from a customer premises termination (12) to provide an interface to a switched telecommunications network (6), and having a gateway (8) arranged to intercept test data received over the connection and to divert the test data, by way of a connection independent of the rest of the network, to a data analysis processor (9) arranged to detect one or more characteristics of said intercepted data.

14. A local switching system according to claim 13, wherein the data analysis processor (9) is linked to the local switching system (5) by a dedicated connection independent of the switched telecommunications network (6).

15. A local switching system according to claim 13 or claim 14, wherein the gateway (8) is arranged to receive test traffic from the data analysis processor (9) for transmission over the connection (4) to the customer premises termination (12).

## Patentansprüche

1. Verfahren zur Durchführung eines Beanspruchungstests an einer Telekommunikationsverbindung (4) zwischen einem kundeneigenen Anschluss (12) und einem lokalen Vermittlungssystem (5), das mit einem Netzwerk (6) verbunden ist, unabhängig von dem restlichen Netzwerk durch Verwenden einer Testvorrichtung (1), die mit einem Emulations-Prozessor versehen und mit dem kundeneigenen Anschluss verbunden ist, wobei das Verfahren die folgenden Schritte umfasst:
a) Verwenden des Emulations-Prozessors zur Steuerung der Testvorrichtung in der Weise, dass ein Port an der Testvorrichtung einem Mapping zu einer Zieladresse einer Dummy-Vorrichtung unter einer Adresse eines Dummy-Zielknotens unterzogen wird;
b) Verwenden des Emulations-Prozessors zum Erzeugen eines großen Volumens von simuliertem Datenverkehr und Übermitteln des simulierten Datenverkehrs durch den Port zu der Zieladresse der Dummy-Vorrichtung;
c) Verwenden des lokalen Vermittlungssystems zum Abfangen der Testdaten in der Weise, dass das Daten-Routing bei dem lokalen Vermittlungssystem beendet wird und die Testdaten zu einem Datenanalyse-Prozessor (9) übermittelt werden, der dazu eingerichtet ist, ein Merkmal oder mehrere Merkmale der abgefangenen Daten zu ermitteln.

2. Verfahren wie in Anspruch 1 beansprucht, bei dem der Emulations-Prozessor Testdaten erzeugt, die in der Lage sind, 100 % der Bandbreite der getesteten Verbindung in Anspruch zu nehmen.

3. Verfahren nach Anspruch 1 oder Anspruch 2, bei dem die Testvorrichtung (1) eine modifizierte Routing-Tabelle betreibt, um eine Dummy-Internetadresse zu erzeugen, die durch das lokale Vermittlungssystem (5) erkennbar ist, und bei dem die Vermittlungsstelle Daten, welche die Dummy-Adresse aufweisen, zu einem Leistungstest-Prozessor (9) umleitet.

4. Verfahren nach Anspruch 3, bei dem ein Adressenauflösungs-Protokoll zur Steuerung des Routings in dem Vermittlungssystem (5) so konfiguriert ist, dass es Daten mit der Dummy-Adresse akzeptiert und sie zu der Leistungstest-Plattform (9) und nicht zu dem Netzwerk (6) umleitet.

5. Verfahren nach Anspruch 3 oder Anspruch 4, bei dem der Leistungstest-Prozessor (9) durch eine zugeordnete, vom öffentlichen Netzwerk (6) unabhängige Verbindung mit dem Vermittlungssystem (5) verbunden wird.

6. Verfahren nach Anspruch 5, bei dem der Leistungstest-Prozessor (9) zugeordnete Links zu einer Vielzahl von Vermittlungssystemen besitzt.

7. Verfahren nach Anspruch 3, Anspruch 4, Anspruch 5 oder Anspruch 6, bei dem die Leistungsmanagement-Plattform (9) Test-Datenverkehr zur Übermittlung an die Testvorrichtung (1) erzeugt.

8. Verfahren nach Anspruch 7, bei dem die Testvorrichtung (1) eine Eigenschaft oder mehrere Eigenschaften des durch den Leistungstest-Prozessor (9) an sie übermittelten Test-Datenverkehrs ermittelt, um ein Test-Maß zu erzeugen, und das Test-Maß an den Leistungstest-Prozessor übermittelt.

9. Leistungs-Testsystem zur Durchführung eines Beanspruchungstests an einer Telekommunikationsverbindung (4) zwischen einem kundeneigenen Anschluss (12) und einer Verbindung mit einem Netzwerk (6) durch ein lokales Vermittlungssystem (5) unabhängig von dem restlichen Netzwerk, das ein Gateway (8) in dem Netzwerk und eine Leistungstest-Plattform (9) aufweist, wobei das Gateway dazu eingerichtet ist, Datenverkehr mit einer vorgegebenen Zieladresse zu der Leistungstest-Plattform (9) umzuleiten, und die Leistungstest-Plattform (9) mit einem Emulations-Prozessor und einem Port zur Verbindung mit dem kundeneigenen Anschluss (12) durch das Gateway (8) versehen ist,
wobei der Emulations-Prozessor dazu eingerichtet ist, die Leistungstest-Plattform so zu steuern, dass der Port an der Leistungstest-Plattform einem Mapping zu einer Zieladresse einer Dummy-Vorrichtung unter einer Adresse eines Dummy-Zielknotens unterzogen wird,
und der Emulations-Prozessor dazu eingerichtet ist, ein großes Volumen von simuliertem Datenverkehr zu erzeugen und den simulierten Datenverkehr durch den Port zu der Zieladresse der Dummy-Vorrichtung zu übermitteln.

10. Leistungs-Testsystem wie in Anspruch 9 beansprucht, bei dem der Emulations-Prozessor (9) Testdaten erzeugt, die in der Lage sind, 100 % der Bandbreite der getesteten Verbindung (4) in Anspruch zu nehmen.

11. Leistungs-Testsystem nach Anspruch 9 oder Anspruch 10, bei dem die Testvorrichtung (1) eine modifizierte Routing-Tabelle betreibt, um eine Dummy-Internetadresse zu erzeugen, die durch das lokale Vermittlungssystem erkennbar ist.

12. Leistungs-Testsystem nach Anspruch 11, bei dem die Testvorrichtung (1) dazu eingerichtet ist, eine Eigenschaft oder mehrere Eigenschaften des über die Telekommunikationsverbindung (4) durch einen Leistungstest-Prozessor (9) an sie übermittelten Test-Datenverkehrs zu ermitteln, um ein Test-Maß zu erzeugen, und das Test-Maß an den Leistungstest-Prozessor (9) übermittelt.

13. Lokales Vermittlungssystem (5), das einen Anschluss einer Verbindung (4) von einem kundeneigenen Anschluss (12) aufweist, um eine Schnittstelle zu einem vermittelten Telekommunikations-Netzwerk (6) bereitzustellen, und das ein Gateway (8) aufweist, das dazu eingerichtet ist, über die Verbindung empfangene Testdaten abzufangen und die Testdaten mittels einer von dem restlichen Netzwerk unabhängigen Verbindung zu einem Datenanalyse-Prozessor (9) umzuleiten, der dazu eingerichtet ist, eine Eigenschaft oder mehrere Eigenschaften der abgefangenen Daten zu ermitteln.

14. Lokales Vermittlungssystem nach Anspruch 13, bei dem der Datenanalyse-Prozessor (9) durch eine zugeordnete, von dem vermittelten Telekommunikations-Netzwerk (6) unabhängige Verbindung mit dem lokalen Vermittlungssystem (5) verbunden ist.

15. Lokales Vermittlungssystem nach Anspruch 13 oder Anspruch 14, bei dem das Gateway (8) dazu eingerichtet ist, Test-Datenverkehr von dem Datenanalyse-Prozessor (9) zur Übermittlung über die Verbindung (4) an den kundeneigenen Anschluss (12) zu empfangen.

## Revendications

1. Procédé de test sous contraintes d'une connexion (4) de télécommunications entre un raccordement (12) de locaux d'abonné et un système (5) de commutation local connecté à un réseau (6), indépendamment du reste du réseau, en utilisant un dispositif (1) de test doté d'un processeur d'émulation et connecté au raccordement de locaux d'abonné, le procédé comprenant les étapes de :
a) utilisation du processeur d'émulation pour commander le dispositif de test de telle manière qu'un port sur le dispositif de test est mappé sur une adresse fictive de destination de dispositif à une adresse fictive de noeud de destination ;
b) utilisation du processeur d'émulation pour générer un volume élevé de trafic de données simulé et transmettre ledit trafic de données simulé à ladite adresse fictive de destination de dispositif par l'intermédiaire dudit port ;
c) utilisation du système de commutation local pour intercepter lesdites données de test de telle manière que l'acheminement de données aboutit au système de commutation local et que les données de test sont envoyées à un processeur (9) d'analyse de données, agencé pour détecter une ou plusieurs caractéristique (s) desdites données interceptées.

2. Procédé selon la revendication 1, dans lequel le processeur d'émulation génère des données de test aptes à occuper 100% de la largeur de bande de la connexion testée.

3. Procédé selon la revendication 1 ou la revendication 2, dans lequel le dispositif (1) de test opère une table d'acheminement modifiée pour générer une adresse Internet fictive reconnaissable par le système (5) de commutation local, et dans lequel le central détourne les données ayant l'adresse fictive jusqu'à un processeur (9) de test de performance.

4. Procédé selon la revendication 3, dans lequel un protocole de résolution d'adresse pour commander l'acheminement dans le central (5) est configuré pour accepter des données ayant l'adresse fictive et pour les détourner jusqu'à la plate-forme (9) de test de performance et non jusqu'au réseau (6).

5. Procédé selon la revendication 3 ou la revendication 4, dans lequel le processeur (9) de test de performance est lié au central (5) par une connexion dédiée indépendante du réseau (6) public.

6. Procédé selon la revendication 5, dans lequel le processeur (9) de test de performance a des liaisons dédiées avec une pluralité de centraux.

7. Procédé selon la revendication 3, la revendication 4, la revendication 5 ou la revendication 6, dans lequel la plate-forme (9) de gestion de performance génère un trafic de test pour transmission au dispositif (1) de test.

8. Procédé selon la revendication 7, dans lequel le dispositif (1) de test détecte une ou plusieurs caractéristique (s) du trafic de test transmis à celui-ci par le processeur (9) de test de performance pour générer une mesure de test, et transmet la mesure de test au processeur de test de performance.

9. Système de test de performance pour un test sous contraintes d'une connexion (4) de télécommunications entre un raccordement (12) de locaux d'abonné et une connexion par l'intermédiaire d'un système (5) de commutation local à un réseau (6), indépendamment du reste du réseau, comprenant une passerelle (8) dans le réseau et une plate-forme (9) de test de performance, la passerelle étant agencée pour détourner un trafic ayant une adresse de destination prédéterminée jusqu'à la plate-forme (9) de test de performance, et la plate-forme (9) de test de performance étant dotée d'un processeur d'émulation et d'un port pour connexion au raccordement (12) de locaux d'abonné par l'intermédiaire de la passerelle (8),
le processeur d'émulation étant agencé pour commander la plate-forme de test de performance de telle manière que le port sur la plate-forme de test de performance est mappé sur une adresse fictive de destination de dispositif à une adresse fictive de noeud de destination ;
et le processeur d'émulation est agencé pour générer un volume élevé de trafic de données simulé et transmettre ledit trafic de données simulé à ladite adresse fictive de destination de dispositif par l'intermédiaire dudit port.

10. Système de test de performance selon la revendication 9, dans lequel le processeur (9) d'émulation génère des données de test aptes à occuper 100% de la largeur de bande de la connexion (4) testée.

11. Système de test de performance selon la revendication 9 ou la revendication 10, dans lequel le dispositif (1) de test opère une table d'acheminement modifiée pour générer une adresse Internet fictive reconnaissable par le système de commutation local.

12. Système de test de performance selon la revendication 11, dans lequel le dispositif (1) de test est agencé pour détecter une ou plusieurs caractéristique (s) du trafic de test transmis à celui-ci sur la connexion (4) de télécommunications par un processeur (9) de test de performance pour générer une mesure de test, et transmet la mesure de test au processeur (9) de test de performance.

13. Système (5) de commutation local comprenant un raccordement d'une connexion (4) depuis un raccordement (12) de locaux d'abonné pour fournir une interface avec un réseau (6) de télécommunications commuté, et ayant une passerelle (8) agencée pour intercepter des données de test reçues sur la connexion et pour détourner les données de test, au moyen d'une connexion indépendante du reste du réseau, jusqu'à un processeur (9) d'analyse de données agencé pour détecter une ou plusieurs caractéristique(s) desdites données interceptées.

14. Système de commutation local selon la revendication 13, dans lequel le processeur (9) d'analyse de données est lié au système (5) de commutation local par une connexion dédiée indépendante du réseau (6) de télécommunications commuté.

15. Système de commutation local selon la revendication 13 ou la revendication 14, dans lequel la passerelle (8) est agencée pour recevoir un trafic de test du processeur (9) d'analyse de données pour transmission sur la connexion (4) jusqu'au raccordement (12) de locaux d'abonné.
